# EUROPÄISCHE PATENTSCHRIFT

(11) **EP 2 055 372 B1**
(45) Veröffentlichungstag und Bekanntmachung des Hinweises auf die Patenterteilung: **15.09.2010**
(21) Anmeldenummer: 07119828.7
(22) Anmeldetag: 01.11.2007
(51) Int. Cl.: B01F 15/00, B01F 7/16, B01F 3/08, B01F 3/12

(54) **Rührereinheit aufweisend einen Adapter**
Stirrer unit comprising an adapter
Unité de mélangeur comprenant un adaptateur

(43) Veröffentlichungstag der Anmeldung: 06.05.2009
(73) Patentinhaber: Mettler-Toledo AG, 8606 Greifensee (CH)
(72) Erfinder: Wild, Hansueli, 8645 Jona (CH); Trüb, Marcel, 8408 Winterthur (CH); Signer, Beat, 8604 Volketswil (CH)

(56) Entgegenhaltungen:
- DE-A1- 2 700 818
- DE-U1- 29 713 578
- JP-A- 59 162 934
- US-A- 4 400 881
- US-A- 4 828 395
- US-A- 5 653 536
- US-A- 6 113 258

## Beschreibung

Die Erfindung betrifft eine Rührereinheit mit einem Reaktionsgefäss und einem höhenverstellbaren Stabrührer.

In vielen Bereichen der Chemie, Biochemie, Pharmazie und Biologie werden Stabrührer zur Durchmischung eines Reaktionsmediums in einem Reaktionsgefäss eingesetzt. Das Rühren ist zum Beispiel bei chemischen und/oder physikalischen Reaktionen mit mehreren Phasen, bei der Zugabe einer Reaktionskomponente oder bei vorhandenen Feststoffanteilen notwendig. In heterogenen OReaktionsmedien hat es die Aufgabe, die Komponenten gut zu durchmischen. In homogenen Reaktionsmedien ist Rühren häufig notwendig, um einen zugegebenen Stoff schnell und gut in der Lösung zu verteilen, um grosse lokale Konzentrationen, lokale Überhitzungen oder Siedeverzüge zu vermeiden. Soll ein Reaktionsmedium über einen längeren Zeitraum oder in einem geschlossenen Reaktionsgefäss gerührt werden, so kann zum Beispiel ein Magnetrührer oder ein klassischer KPG-Rührer verwendet werden.

Ein Magnetrührer besteht aus einem ummantelten Eisenelement, welches in das Reaktionsmedium eingebracht wird und einem Antrieb, welcher sich ausserhalb des Reaktionsgefässes befindet. Es sind Eisenelemente mit unterschiedlichen Formen bekannt, wobei die Wahl von Form und Länge des Eisenelements auf die Dimensionen des Reaktionsgefässes und die Art und Viskosität des Reaktionsmediums abgestimmt wird. Nachteilig an diesen Rührern ist, dass das Eisenelement gerade bei komplexen Laboraufbauten nur schwer aus dem Reaktionsgefäss entfernt werden kann und ein Magnetrührer zudem nicht für viskose oder hochviskose Reaktionsmedien verwendet werden kann.

Ein KPG-Rührer besteht häufig aus einer gläsernen Rührwelle, deren eines Ende als Rührblatt ausgestaltet oder mit einem verbunden ist und deren anderes Ende über einen Kupplung mit einem Elektromotor verbunden ist. Als Kupplung wird vor allem im Laborbereich einfach ein Stück Vakuumschlauch verwendet. KPG-Rührer können auch für die Durchmischung von Reaktionsmedien mit höheren Viskositäten verwendet werden, allerdings zeichnen sie sich aufgrund des Elektromotors durch einen hohen Platzbedarf aus und können erst ab einer bestimmten Füllhöhe des Reaktionsgefässes effektiv eingesetzt werden. Zudem müssen sowohl das Reaktionsgefäss als auch der Elektromotor an einem geeigneten Gestänge gesichert werden und gläserne Rührwellen können nur in einer Laborumgebung eingesetzt werden, da sie aufgrund der materialbedingten Bruchgefahr ständig überwacht werden sollten.

Weiterentwicklungen haben daher häufig Rührwellen aus anderen Werkstoffen, wie verschiedenen Metallen, Keramiken oder Polymeren, welche über eine geeignete Kupplung von einem Motor angetrieben werden.

Der Vorteil von Stabrührern, zu denen im weitesten Sinne auch die erwähnten KPG-Rührer zählen, liegt darin, dass man sie einfacher aus dem Reaktionsmedium entfernen kann, und dass sie auch hochviskose Reaktionsmedien durchmischen können.

Die Durchmischung des Reaktionsmediums wird einerseits von der Wahl des Rührblatts, der Leistung des Motors und der eingestellten Umdrehungszahl beeinflusst, andererseits auch von der Ausrichtung des Rührblatts im Reaktionsgefäss. So hat es sich gezeigt, dass wenn sich das Volumen des Reaktionsmediums vergrössert oder der Füllstand erhöht, beispielsweise bei Zugabe weiterer Reaktanden, auch das Rührblatt nachgeführt werden sollte, um eine gleichbleibende Durchmischung zu gewährleisten. Unter Nachführung des Rührblatts wird hier sowohl eine Veränderung des Abstands zwischen einem Zugangsstutzen am Reaktionsgefäss und dem im Reaktionsgefäss angeordneten Rührblatt verstanden, als auch eine Veränderung der Eindringtiefe der Rührwelle in das Reaktionsgefäss, siehe beispiels weise in der US 4828395,A.

In der Regel wird der Rührer mittels eines geeigneten Adapters am Zugangsstutzen des Reaktionsgefässes befestigt und das Reaktionsgefäss wie auch der Motor an einem Stativ oder ähnlichem gesichert. Um die Höhe des Rührblatts einstellen zu können, können zum Beispiel unterschiedlich lange Rührwellen und/oder Zwischenstücke eingesetzt werden. Dieses hat den Nachteil, dass zur Nachführung des Rührblatts entweder der komplette Rührer aus dem Reaktionsgefäss entfernt, demontiert und wieder zusammengebaut werden muss, oder zumindest Teile des Aufbaus oder des Rührers entfernt werden müssen.

Daher wäre es wünschenswert, wenn die Eindringtiefe der Rührwelle einfach, schnell und reproduzierbar einstellbar wäre, um Unterbrechungen des Rührprozesses möglichst kurz zu halten. Das Reaktionsmedium sollte ständig in Bewegung bleiben, um beispielsweise lokale Überhitzungen oder unerwünschten Nebenreaktionen zu unterdrücken. Zudem könnte beim Ausbau des Rührers Reaktionsmedium aus dem Reaktionsgefäss entfernt werden, was zu einer Veränderung der Reaktanden-Verhältnisse führen kann und letztendlich einen Einfluss auf die Ausbeute und/oder die Reaktionsprodukte haben kann.

Daher besteht die Aufgabe der Erfindung in der Entwicklung eines Stabrührers, bei dem die Eindringtiefe des Rührers in ein Reaktionsgefäss einfach und schnell verändert werden kann, ohne den Rührer aus dem Reaktionsgefäss entfernen zu müssen.

Gelöst wird diese Aufgabe durch eine Rührereinheit mit einem Reaktionsgefäss, welches einen Zugangsstutzen aufweist, und mit einem Stabrührer. Der Stabrührer weist ein Rührblatt, eine am Rührblatt befestigte Rührwelle und einen Adapter mit einer Durchführung, in der die Rührwelle geführt ist, auf. Der Adapter kann passgenau in den Zugangsstutzen eingesetzt werden und ist mittels eines Befestigungsmittels lösbar am Zugangsstutzen befestigbar, so dass das Rührblatt und ein Teil der Rührwelle im Reaktionsgefäss angeordnet sind. Die erfindungsgemässe Rührereinheit zeichnet sich dadurch aus, dass die Eindringtiefe der Rührwelle in das Reaktionsgefäss einstellbar und mit einer Arretierung in mindestens zwei beabstandeten Positionen fixierbar ist, während der Adapter mit dem Zugangsstutzen verbunden ist.

Eine derartige Rührereinheit ist sehr vorteilhaft, da es möglich ist, die Eindringtiefe ohne eine Demontage und/oder eine Teildemontage der Rührereinheit zu verändern und reproduzierbar in mindestens zwei Positionen einzustellen.

Die Rührwelle ist in einer Führungshülse geführt, welche gegen den Adapter verstellbar ist. Durch eine Verschiebung der Führungshülse relativ zum Adapter entlang der Längsachse des Stabrühres wird die Rührwelle eine gewisse Strecke aus dem Reaktionsgefäss herausgezogen oder in dieses hineingeschoben, so das auf diese Weise die Eindringtiefe verändert werden kann.

Der Abstand zwischen Adapter und Führungshülse kann beispielsweise durch Drehen, verbunden mit einer gleichzeitigen Verschiebung der Führungshülse entlang der Längsachse des Stabrührers, verändert werden, wodurch eine kontinuierliche Einstellung der Eindringtiefe ermöglicht wird.

Dieses kann insbesondere durch eine Ausgestaltung des Adapters und der Führungshülse mit zusammenwirkenden Einstellgewinden erreicht werden. Der Adapter ist mit einem Aussengewinde ausgestaltet, welches in ein Innengewinde der Führungshülse eingreifen kann. Auf diese Weise ist eine stufenlose Verstellung der Eindringtiefe möglich.

Zur Fixierung der gewünschten Eindringtiefe kann die Führungshülse mittels der Arretierung am Adapter festgelegt werden. Bei einer kontinuierlich verstellbaren Führungshülse kann die Arretierung beispielsweise in Form von Schrauben, Federn oder ähnlichen Elementen ausgestaltet sein, welche die Führungshülse am Adapter fixieren.

In einer bevorzugten Ausgestaltung hat die Arretierung die Form eines Arretierhebels, welcher an der Führungshülse angeordnet ist, und welcher mit mindestens zwei voneinander beabstandete Aussparungen zusammenwirkt, welche an der Aussenseite des Adapters angeordnet sind. Ein Ende des Arretierhebels kann so ausgestaltet sein, dass dieses in die Aussparungen eingreifen und/oder einrasten kann. Zur Fixierung der Arretierung kann ein elastisches Element dienen, welches im Falle des Arretierhebels dessen eines Ende in eine der Aussparungen drückt und so darin fixiert.

Die Ausgestaltung als Arretierhebel hat den Vorteil, dass ein Hebel einfach und insbesondere einhändig bedienbar und um eine Lagerstelle verkippbar ist. Das elastische Element kann den Arretierhebel wieder in seine ursprüngliche Position zurückstellen.

In einer weiteren Ausgestaltung kann die Arretierung als Kontermutter ausgestaltet sein. Weiterhin kann die Arretierung als Schraube, insbesondere als Madenschraube, ausgestaltet sein. Diese beiden Ausführungen der Arretierung sind insbesondere in Kombination mit den Einstellgewinden vorteilhaft.

Die Kontermutter kann manuell leicht gelöst werden, worauf die Eindringtiefe verändert werden kann und durch manuelles Anziehen der Kontermutter wieder fixierbar ist.

Eine schraubenförmige Arretierung kann beispielsweise aussen aus der Führungshülse hervorstehen und dann einfach manuell gelöst oder angezogen werden. Alternativ ist es auch möglich, eine Madenschraube zu verwenden, welche mit einem geeigneten Hilfsmittel gelöst oder angezogen werden kann.

Ein Ende der Rührwelle ist mit dem Rührblatt verbunden oder als Rührblatt ausgestaltet, das andere Ende kann mit einem ersten Kupplungselement verbunden werden oder als solches ausgestaltet sein.

Als Antrieb kann die Rührereinheit einen Motor und eine mit diesem verbundene Motorwelle aufweisen, deren freies Ende mit einem zweiten Kupplungselement verbunden oder als solches ausgestaltet ist. Das zweite Kupplungselement kann mit dem ersten Kupplungselement gekoppelt werden, so dass zum Beispiel ein vom Motor erzeugtes Drehmoment auf die Rührwelle übertragen werden kann.

Die Kupplungselemente sollten sich dadurch auszeichnen, dass die Kupplung schnell und ohne Einsatz von Hilfsmittel gelöst oder verbunden werden können, wobei die Ausgestaltung der Kupplungselemente nicht auf eine bestimmte Form limitiert ist, sondern jegliche bekannte Elementen umfasst, welche eine Kupplung gewährleisten können.

Es ist vorteilhaft, wenn der Motor lösbar mit der Führungshülse verbunden werden kann, so dass dieser einfach, vorzugsweise manuell und/oder ohne Einsatz von Werkzeugen oder andere Hilfsmitteln abgetrennt werden kann, und die Rührereinheit beispielsweise an einen anderen Platz im Labor gestellt und/oder gekühlt werden kann. Um dieses zu erreichen, kann der Motor mittels eines Motorflansches mit der Führungshülse verbunden werden.

Bevorzugt wird eine Klemmverbindung zwischen Motor und Führungshülse, die bei einer festen Verbindung zwischen Reaktionsgefäss, Adapter und Führungshülse einhändig gelöst werden kann, ohne dass die Eindringtiefe der Rührwelle verändert wird. Motor und Rührwelle können somit ohne Veränderung der Eindringtiefe von einander gelöst werden.

Weitere Ausgestaltungen können eine Schnappverbindung, eine Einrastverbindung oder eine Bajonettverbindungen zwischen dem Motor und der Führungshülse aufweisen.

Eine erfindungsgemässe Rührereinheit wird anhand der folgenden Figuren beschrieben, wobei gleiche Elemente mit gleichen Bezugszeichen versehen sind. Die Figuren zeigen:
- Fig. 1: eine Rührereinheit mit einem Reaktionsgefäss und einem Stabrührer im Schnitt;
- Fig. 2: den Stabrührer aus Figur 1 im auseinander gebauten Zustand ohne Rührwelle und Rührblatt im Schnitt;
- Fig. 3: den Stabrührer aus Figur 2 in einer dreidimensionalen Explosionsdarstellung;
- Fig. 4: eine weitere Ausgestaltung von Führungshülse, Adapter und Arretierung im Schnitt;
- Fig. 5: eine weitere Ausgestaltung von Führungshülse, Adapter und Arretierung im Schnitt.

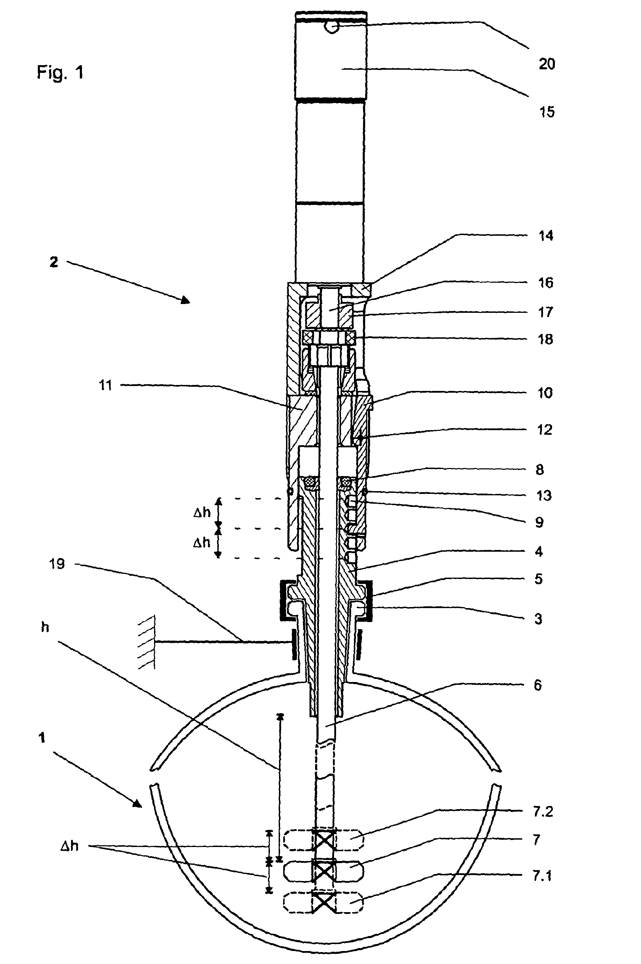

Figur 1 zeigt eine Rührereinheit mit einem Reaktionsgefäss 1 und einem Stabrührer 2. Das Reaktionsgefäss 1 weist einen Zugangsstutzen 3 auf, in dem ein Adapter 4 des Stabrührers 2 passgenau eingesteckt ist. Der Adapter 4 ist mittels eines geeigneten Befestigungsmittels 5, wie einer hier gezeigten Klammer, mit dem Zugangsstutzen 3 lösbar verbunden. Der Adapter 4 ist so ausgestaltet, dass er den Zugangsstutzen 3 ausfüllt und so das Reaktionsgefäss 1 verschliesst.

Der Adapter 4 hat eine mittige Durchführung, in welcher eine Rührwelle 6 gelagert ist. Die Rührwelle 6 ist mit einem Rührblatt 7 verbunden, welches sich im Reaktionsgefäss 1 befindet. Die Grösse des Rührblatts 7 kann an den Durchmesser des Reaktionsgefässes 1 angepasst werden. Zum leichteren Entfernen und Einbringen des Stabrühres in das Reaktionsgefäss 1, kann das Rührblatt 7 klappbar oder flexibel ausgestaltet sein, so dass es durch den Zugangsstutzen 3 passt. Das dem Reaktionsgefäss 1 abgewandte Ende des Adapters 4 ist durch ein Dichtmittel 8 gegenüber der Rührwelle 6 abgedichtet. Ferner befinden sich an der Aussenseite des Adapters 4 mehrere Aussparungen 9, in welche eine hebelartige Arretierung 10 einrasten kann. Die Arretierung 10 ist an einer Führungshülse 11 angeordnet, welche gegen den Adapter 4 entlang der Längsachse des Stabrührers verschiebar ist. Die Arretierung 10 weist eine Lagerstelle 12 auf, um welche die hebelartige Arretierung geschwenkt werden kann.

Die Führungshülse 11 kann bei gelöster Arretierung 10 entlang der Längsachse des Stabrührers verschoben und in mehreren, durch die Aussparungen 9 vorgegebenen Abständen zum Adapter 4 fixiert werden. Der Adapter 4 und die Führungshülse 11 bestehen aus einem glatten Material, um ein möglichst reibungsloses Verschieben zu ermöglichen, wobei das für den Adapter 4 verwendete Material zusätzlich chemisch inert sein muss. Es bietet sich an, diese Elemente beispielsweise aus PTFE herzustellen.

Durch Lösen der Arretierung 10, Verschieben der Führungshülse 11 und erneutes Einrasten der Arretierung 10 in eine andere Aussparung 9 kann die Eindringtiefe h des Rührblatts 7 in das Reaktionsgefäss 1 verändert werden.

In Figur 1 rastet die Arretierung 10 in die mittlere Aussparung 9 ein. Die Eindringtiefe h könnte ausgehend von dieser Anordnung um Δh entlang der Längsachse des Stabrühres 2 verschoben werden, wie es durch die gestrichelt eingezeichneten Rührblätter 7.1, 7.2 angedeutet wird.

Zur Fixierung der Arretierung 10 ist diese mittels eines elastischen Elements 13, welches in einer Nut der Führungshülse 11 angeordnet ist, federnd an die Führungshülse 11 angelegt. Wird Druck auf den in der Zeichnung oberen und breiter dargestellten Teil der Arretierung 10 ausgeübt, so wird diese aus einer der Vertiefungen 9 herausgedrückt, bei nachlassendem Druck durch das elastische Element 13 wieder gegen die Führungshülse 11 gedrückt und rastet in eine andere oder dieselbe Aussparung 9 ein.

Die Führungshülse 11 ist ferner über einen Motorflansch 14 mit dem Gehäuse eines Motors 15 lösbar verbunden. Der Motor 15 weist eine Motorwelle 16 auf, welche an ihrem freien Ende mit einem zweiten Kupplungselement 17 verbunden ist. Ferner hat der Motor 15 einen Anschluss 20 für ein Strom- und/oder Datenkabel. Das zweite Kupplungselement 17 greift in ein erstes Kupplungselement 18 ein, das mit der Rührwelle 6 verbunden ist.

Der Motor 15 kann über die Motorwelle 16 und die Kupplungselemente 17, 18 ein Drehmoment auf die Rührwelle 6 übertragen. Wenn das Reaktionsgefäss 1 an einem Stativ 19 oder in einer anderen geeigneten Weise befestigt ist, dann kann das durch den Motor 15 erzeugte Gegendrehmoment über das Befestigungsmittel 5 auf das Reaktionsgefäss 1 und/oder das Stativ 19 übertragen werden. Dadurch erübrigt sich eine zusätzliche Sicherung des Stabrühres 2, beispielsweise eine Befestigung des Motors 15, und es ist möglich, die Eindringtiefe h des Rührblatts 7 in das Reaktionsgefäss einhändig zu verändern.

Neben der gezeigten Sicherung des Reaktionsgefässes 1 am Stativ 19, kann das Reaktionsgefäss 2 zum Beispiel auch Teil eines analytischen Geräts sein und in oder an diesem befestigt sein.

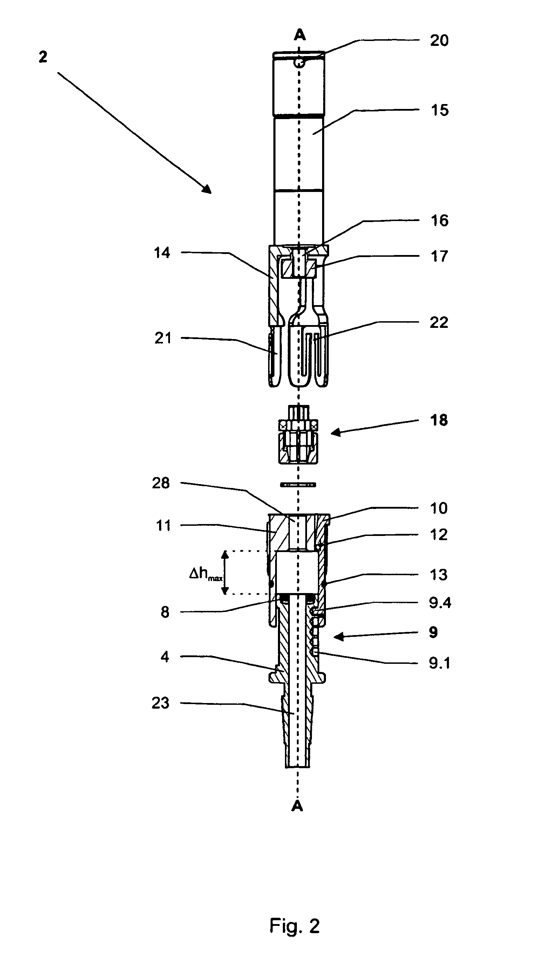

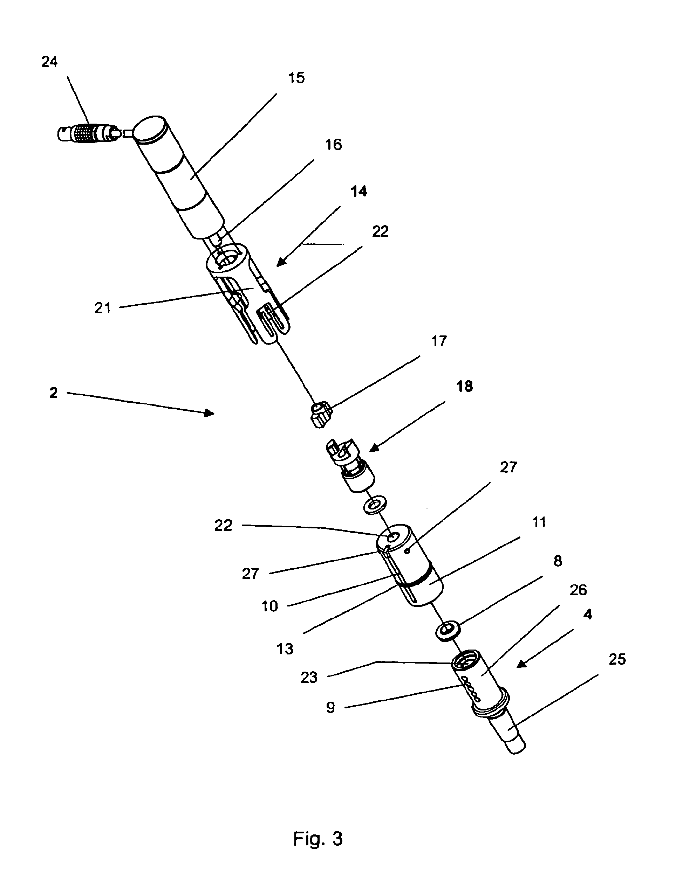

Figur 2 zeigt den Stabrührer 2 im auseinander gebauten Zustand im Schnitt. Der Motor 15 kann gemeinsam mit dem Motorflansch 14, der Motorwelle 16 und dem zweiten Kupplungselement 17 von der Führungshülse 11 durch einfaches Abziehen getrennt werden, da der Motorflansch 14 über eine Klemmverbindung mit der Führungshülse 11 verbunden ist. Die Klemmverbindung wird durch die teilelastischen, gabelartigen Ausläufer oder Klemmfedern 21 des Motorflansches gebildet, welche einerseits die Führungshülse 11 umschliessen und anderseits mit den Aussparungen 22 in Rasthilfen einrasten, welche aussen an der Führungshülse angebracht sind (s. Figur 3).

Neben dem Motor 15, kann auch das erste Kupplungselement 18 von der Rührwelle (hier nicht gezeigt) entfernt werden.

Die Führungshülse 11 und der Adapter 4 sind in Figur 2 maximal gegeneinander verschoben und weisen einen Abstand Δhₘₐₓ zueinander auf, welcher durch den Abstand der Aussparungen 9.1, 9.4 definiert wird. Dieser maximale Abstand Δhₘₐₓ entspricht der maximalen Verfahrstrecke des Rührblatts und/oder der Rührwelle im Reaktionsgefäss und damit der maximalen Änderung der Eindringtiefe (s. Figur 1).

Die Rührwelle mit dem daran befestigtem Rührblatt ist hier nicht dargestellt (s. Figur 1). Die Rührwelle kann in den Durchführungen 23, 24 im Adapter 4 bzw. in der Führungshülse 11 gelagert werden.

In Figur 3 ist der Stabrührer 2 in einer dreidimensionalen Explosionsdarstellung gezeigt. Zusätzlich zu den bereits in den Figuren 1 und 2 gezeigten Elementen sind hier ein mit dem Motor 15 verbindbares Strom- und/oder Datenkabel 24 sowie die an der Aussenseite der Führungshülse 11 angeordneten Rasthilfen 27 gezeigt, welche im montierten Zustand jeweils in eine Aussparung 22 der gabelartigen Ausläufer 21 des Motorflansches 14 einrasten.

Weiterhin ist der einstückige Adapter 4 zu erkennen, welcher aus einem Verbindungsstück 25 zur Verbindung mit dem Reaktionsgefäss, sowie einer Verstellhülse 26 besteht. Aussen an der Verstellhülse 26 sind mehrere Aussparungen 9 angebracht, welche mit der Arretierung 10 zusammenwirken können.

Die Kupplungselemente 17, 18 greifen im montierten Zustand ineinander. In Abhängigkeit des Materials der verwendeten Rührwelle können unterschiedliche erste Kupplungselemente eingesetzt werden, wie beispielsweise Klemmkupplungen, Spannzapfen, Gewindeverbindungen und andere Varianten, welche dem Fachmann wohlbekannt sind.

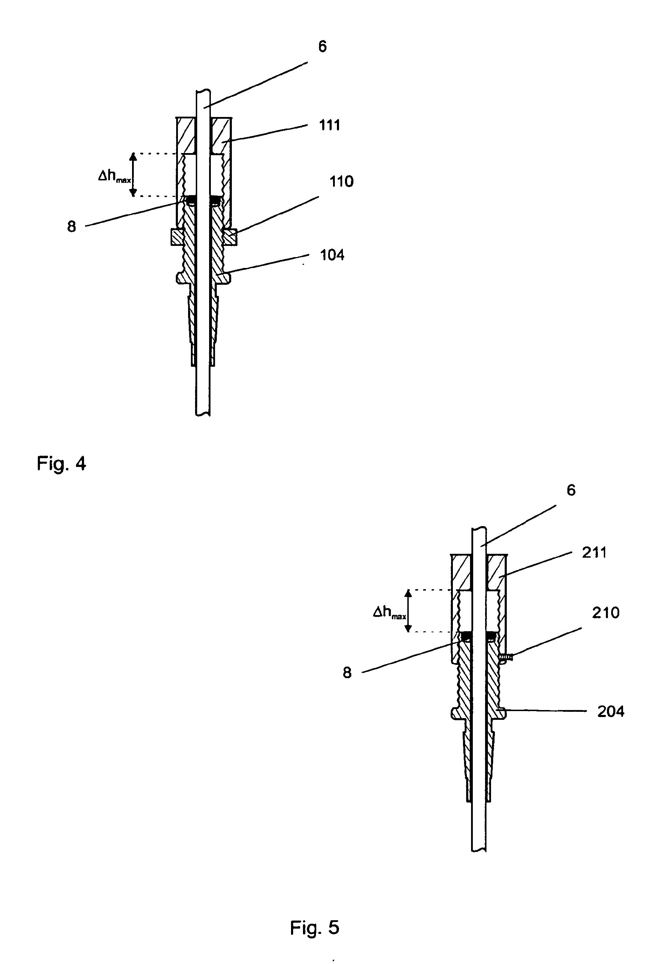

Figur 4 zeigt eine weitere Ausgestaltung eines Adapters 104 und einer Führungshülse 111. Der Adapter 104 weist ein Aussengwinde auf, welches mit einem Innengewinde der Führungshülse 111 zusammenwirkt. Die Gewinde bilden ein Einstellgewinde mit dem die Führungshülse 111 relativ zum Adapter 104 entlang der Längsachse des Stabrühres verschoben werden kann. Die Rührwelle 6 wird im Adapter 104 und der Führungshülse 111 geführt. Als Arretierung 110 weist diese Ausgestaltung eine Kontermutter 110 auf, welche am Adapter 104 angeordnet ist.

Das in Figur 5 gezeigte Ausführungsbeispiel weist eine Führungshülse 211 mit einem Innengewinde und einen Adapter 204 mit einem Aussengewinde auf, welche Gewinde zusammenwirken und eine relative Verschiebung der Führungshülse 211 zum Adapter 204 entlang der Längsachse des Stabrühres 2 erlauben. Als Arretierung 210 dient eine Schraube, beispielsweise eine Madenschraube oder Rädelschraube, welche die Führungshülse 210 am Adapter 204 arretiert, indem diese in die Führungshülse 210 geschraubt und gegen den Adapter 104 gedrückt wird.

### Bezugszeichenliste

- 1: Reaktionsgefäss
- 2: Stabrührer
- 3: Zugangsstutzen
- 4,104,204: Adapter
- 5: Befestigungsmittel
- 6: Rührwelle
- 7,7.1,7.2: Rührblatt
- 8: Dichtmittel
- 9,9.1,9.4: Aussparung
- 10, 110, 210: Arretierung
- 11,111,211: Führungshülse
- 12: Lagerstelle
- 13: elastisches Element
- 14: Motorflansch
- 15: Motor
- 16: Motorwelle
- 17: zweite Kupplungselement
- 18: erstes Kupplungselement
- 19: Stativ
- 20: Anschluss
- 21: gabelartige Ausläufer / Klemmfedern
- 22: Aussparung
- 23: Durchführung in 4
- 24: Strom- und/oder Datenkabel
- 25: Verbindungsstück
- 26: Verstellhülse
- 27: Rasthilfe
- 28: Durchführung in 11

## Patentansprüche

1. Rührereinheit mit einem Reaktionsgefäss (1), welches einen Zugangsstutzen (3) aufweist, und mit einem Stabrührer (2), welcher ein Rührblatt (7), eine am Rührblatt befestigte Rührwelle (6) und einen Adapter (4,104, 204) mit einer Durchführung (23), in der die Rührwelle geführt ist, aufweist, wobei der Adapter (4,104,204) in den Zugangsstutzen (3) einsetzbar und mittels eines Befestigungsmittels (5) lösbar am Zugangsstutzen (3) befestigt ist, so dass das Rührblatt (7) und ein Teil der Rührwelle (6) im Reaktionsgefäss (1) angeordnet sind, **dadurch gekennzeichnet, dass** die Eindringtiefe (h) der Rührwelle (6) ins Reaktionsgefäss (1) einstellbar und mit einer Arretierung (10, 110, 210) in mindestens zwei beabstandeten Positionen fixierbar ist, während der Adapter (4, 104, 204) mit dem Zugangsstutzen (3) verbunden ist.

2. Rührereinheit nach Anspruch 1, **dadurch gekennzeichnet, dass** die Rührwelle in einer Führungshülse (11) geführt ist, wobei der Adapter (4, 104, 204) und die Führungshülse (11, 111, 211) entlang der Längsachse des Stabrührers (2) gegeneinander verstellbar sind.

3. Rührereinheit nach Anspruch 2, **dadurch gekennzeichnet, dass** die Führungshülse (11, 111, 211) mittels der Arretierung (10, 110, 210) am Adapter (4, 104, 204) festlegbar ist.

4. Rührereinheit nach einem der Ansprüche 1 bis 3, **dadurch gekennzeichnet, dass** die Arretierung (10) als Arretierhebel ausgestaltet und an der Führungshülse (11) angeordnet ist.

5. Rührereinheit nach einem der Ansprüche 1 bis 4, **dadurch gekennzeichnet, dass** die Arretierung (10) mit einem elastischen Element (13) fixierbar ist.

6. Rührereinheit nach einem der Ansprüche 1 bis 5, **dadurch gekennzeichnet, dass** an der Aussenseite des Adapters (4) mindestens zwei beabstandete Aussparungen (9, 9.1, 9.2) angeordnet sind, welche mit der Arretierung (10) zusammenwirken.

7. Rührereinheit nach einem der Ansprüche 1 bis 3, **dadurch gekennzeichnet, dass** der Adapter (104, 204) ein Aussengewinde und die Führungshülse (111, 211) ein Innengewinde aufweisen, wobei die Gewinde zusammenwirken und die Eindringtiefe (h) stufenlos einstellbar ist.

8. Rührereinheit nach Anspruch 7, **dadurch gekennzeichnet, dass** die Arretierung (110, 210) als Kontermutter oder schraubenförmig ausgestaltet ist.

9. Rührereinheit nach einem der Ansprüche 1 bis 8, **dadurch gekennzeichnet, dass** das dem Rührblatt (7) gegenüberliegende Ende der Rührwelle (6) mit einem ersten Kupplungselement (18) verbunden ist.

10. Rührereinheit nach einem der Ansprüche 1 bis 9, **dadurch gekennzeichnet, dass** diese ferner einen Motor (15) und eine mit dem Motor (15) verbundene Motorwelle (16) aufweist, wobei das freie Ende der Motorwelle (16) mit einem zweiten Kupplungselement (17) verbunden ist, welches mit dem ersten Kupplungselement (18) koppelbar ist.

11. Rührereinheit nach Anspruch 10, **dadurch gekennzeichnet, dass** der Motor (15) mittels eines Motorflansches (14) lösbar mit der Führungshülse (11, 111, 211) verbunden ist.

## Claims

1. Stirrer unit with a reaction vessel (1) which comprises an inlet port (3), and with a shaft stirrer (2) which comprises a stirrer blade (7), a stirrer shaft (6) connected to the stirrer blade, and an adapter (4, 104, 204) with a passage (23) in which the stirrer shaft is held, wherein the adapter (4, 104, 204) can be set into the inlet port (3) and is releasably fastened to the inlet port (3) with a fastening means (5), so that the stirrer blade (7) and a part of the stirrer shaft (6) are arranged inside the reaction vessel (1), **characterized in that** the depth (h) to which the stirrer shaft (6) is immersed in the reaction vessel (1) is adjustable and capable of being secured by means of a locking device (10, 110, 210) in at least two positions that are spaced apart from each other, while the adapter (4, 104, 204) is in a connected state with the inlet port (3).

2. Stirrer unit according to claim 1, **characterized in that** the stirrer shaft is mounted in a guide sleeve (11), with the adapter (4, 104, 204) and the guide sleeve (11, 111, 211) being position-adjustable relative to each other along the lengthwise axis of the shaft stirrer (2).

3. Stirrer unit according to claim 2, **characterized in that** the guide sleeve (11, 111, 211) can be secured by means of the locking device (10, 110, 210) in a fixed position on the adapter (4, 104, 204).

4. Stirrer unit according to one of the claims 1 to 3, **characterized in that** the locking device (10) is configured as a locking lever and is arranged on the guide sleeve (11).

5. Stirrer unit according to one of the claims 1 to 4, **characterized in that** the locking device (10) can be secured in a fixed position by means of an elastic element (13).

6. Stirrer unit according to one of the claims 1 to 5, **characterized in that** at least two recesses (9, 9.1, 9.2) that are spaced apart from each other and which cooperate with the locking device (10) are arranged on the outside of the adapter (4).

7. Stirrer unit according to one of the claims 1 to 3, **characterized in that** the adapter (104, 204) comprises an external screw thread and the guide sleeve (111, 211) comprises an internal screw thread, wherein said screw threads cooperate with each other and the immersion depth (h) is adjustable in a stepless manner.

8. Stirrer unit according to claim 7, **characterized in that** the locking device (110, 210) is configured as a counter nut or in the form of a screw.

9. Stirrer unit according to one of the claims 1 to 8, **characterized in that** the portion of the stirrer shaft (6) at the opposite end from the stirrer blade (7) is connected to a first coupling element (18).

10. Stirrer unit according to one of the claims 1 to 9, **characterized in that** the stirrer unit further comprises a motor (15) and a motor shaft (16) connected to the motor (15), wherein the free end of the motor shaft (16) is connected to a second coupling element (17) which is designed so that it can be coupled to the first coupling element (18).

11. Stirrer unit according to claim 10, **characterized in that** the motor (15) is releasably connected to the guide sleeve (11, 111, 211) by means of a motor flange (14).

## Revendications

1. Unité agitateur comprenant un récipient de réaction (1), lequel présente une tubulure d'accès (3), et un agitateur à barre (2), lequel présente une lame d'agitation (7), un arbre d'agitation (6) fixé sur la lame d'agitation et un adaptateur (4, 104, 204) avec un passage (23), dans lequel l'arbre d'agitation est guidé, l'adaptateur (4, 104, 204) pouvant être inséré dans la tubulure d'accès (3) et étant fixé au moyen d'un moyen de fixation (5) de façon amovible sur la tubulure d'accès (3), de sorte que la lame d'agitation (7) et une partie de l'arbre d'agitation (6) sont disposées dans le récipient de réaction (1), **caractérisée en ce que** la profondeur de pénétration (h) de l'arbre d'agitation (6) dans le récipient de réaction (1) est réglable et peut être fixé avec un dispositif d'arrêt (10, 110, 210) dans au moins deux positions espacées, alors que l'adaptateur (4, 104, 204) est relié à la tubulure d'accès (3).

2. Unité agitateur selon la revendication 1, **caractérisée en ce que** l'arbre d'agitation est guidé dans un manchon de guidage (11), l'adaptateur (4, 104, 204) et le manchon de guidage (11, 111, 211) pouvant être déplacés le long de l'axe longitudinal de l'agitateur à barre (2) l'un par rapport à l'autre.

3. Unité agitateur selon la revendication 2, **caractérisée en ce que** le manchon de guidage (11, 111, 211) peut être fixé au moyen du dispositif d'arrêt (10, 110, 210) sur l'adaptateur (4, 104, 204).

4. Unité agitateur selon l'une quelconque des revendications 1 à 3, **caractérisée en ce que** le dispositif d'arrêt (10) est conçu comme levier d'arrêt et est disposé sur le manchon de guidage (11).

5. Unité agitateur selon l'une quelconque des revendications 1 à 4, **caractérisée en ce que** le dispositif d'arrêt 10) peut être fixé avec un élément (13) élastique.

6. Unité agitateur selon l'une quelconque des revendications 1 à 5, **caractérisée en ce qu'**au moins deux évidements (9, 9.1, 9.2) espacés sont disposés sur le côté extérieur de l'adaptateur (4) et coopèrent avec le dispositif d'arrêt (10).

7. Unité agitateur selon l'une quelconque des revendications 1 à 3, **caractérisée en ce que** l'adaptateur (104, 204) présente un filetage extérieur et le manchon de guidage (111, 211) un filetage intérieur, les filetages coopérant et la profondeur de pénétration (h) pouvant être réglé progressivement.

8. Unité agitateur selon la revendication 7, **caractérisée en ce que** le dispositif d'arrêt (110, 210) est conçu comme contre-écrou ou en forme d'hélice.

9. Unité agitateur selon l'une quelconque des revendications 1 à 8, **caractérisée en ce que** l'extrémité, opposée à la lame d'agitation (7) de l'arbre d'agitation (6) est reliée à un premier élément d'accouplement (18).

10. Unité agitateur selon l'une quelconque des revendications 1 à 9, **caractérisée en ce que** celle-ci présente également un moteur (15) et un arbre moteur (16) relié au moteur (15), l'extrémité libre de l'arbre moteur (16) étant reliée à un second élément d'accouplement (17), qui peut être couplé avec le premier élément d'accouplement (18).

11. Unité agitateur selon la revendication 10, **caractérisée en ce que** le moteur (15) est relié au moyen d'une bride de moteur (14) de façon amovible au manchon de guidage (11, 111, 211).
